# EUROPEAN PATENT APPLICATION

(11) **EP 1 100 075 A1**
(43) Date of publication of application: **16.05.2001**
(21) Application number: 99122440.3
(22) Date of filing: 11.11.1999
(51) Int. Cl.: G10L 15/18, G10L 15/06

(54) **Method for the construction of a continuous speech recognizer**

(71) Applicant: DEUTSCHE THOMSON-BRANDT GMBH, 78048 Villingen-Schwenningen (DE)
(72) Inventor: Eilts-Grimm, Klaus, 21339 Lüneburg (DE); Laabs, Jürgen, 30982 Pattensen (DE)
(74) Representative: Hartnack, Wolfgang, Dipl.-Ing.

(57) **Abstract**

The standard procedure to construct a statistical grammar for a speech recognizer, e.g. Bigram or Trigram Model, is to calculate it from a sufficiently large corpus automatically with known software. The corpus consists of some ten thousand or more meaningful sentences and has to be built from appropriate scenarios, or a standard corpus has to be used. For specialized applications there often is no corpus available, or a known corpus does not fit exactly or is too large. According to the invention sentence generators are used, which build groups of sentences each covering a certain area of the corpus to be constructed. The corpus is assembled from the outputs of the sentence generators. Special generators for supplementary sentence extensions can be used, which can have links to an arbitrary number of sentence generators.

## Description

The invention relates to a method for the construction of a continuous speech recognizer, which can be used e.g. for the voice control of television sets.

### Prior art

Continuous speech recognition systems convert the continuous speech waveform to a sequence of equally spaced parameter vectors. This sequence of parameter vectors build the basis for the decision, which word sequence has been spoken. Statistical methods are used to determine, which word sequence fits best to the sequence of parameter vectors. Especially two probabilities are used, an acoustical and a linguistic probability. The acoustical probability links the sequence of parameter vectors with individual words of the vocabulary. The linguistic probability uses a language model and is based on the fact that various sequences of given words do have different probabilities, wherein senseful sentences have a higher probability than meaningless sentences. In order to reduce the needed calculation power to reasonable values for a given word not all predecessors are used but only two (Bigram) or three successive words (Trigram). The probabilities for the different Bigrams or Trigrams are estimated in a "training" period by determining the relative probabilities in a training text corpus.

The standard procedure to construct a statistical grammar for a speech recognizer (Bigram or Trigram Model) is to calculate it from a sufficiently large corpus automatically with known software. The corpus consists of some ten thousand or more meaningful sentences and has to be built from appropriate scenarios, or a standard corpus has to be used. For specialized applications there often is no corpus available, or a known corpus does not fit exactly or is too large.

### Invention

The invention is based on the object of specifying a method for the construction of a continuous speech recognizer, which fits exactly to a specialized application, and which is adaptable in a simple way, if the application is expanded.

This object is achieved by means of the method specified in claim 1.

In principle, the method for the construction of a continuous speech recognizer, wherein a statistical grammar model is calculated based on a corpus of sentences, consists in the fact that sentence generators are used, which build groups of sentences each covering a certain area of the corpus to be constructed, wherein the corpus is assembled from the outputs of the sentence generators.

In an advantageous manner, the sentence generators are derived from small scenarios or found intuitively.

In an advantageous development the corpus is assembled from the weighted outputs of the sentence generators.

Furthermore, it may be particularly advantageous, if the certain areas covered by the sentence generators are special commands, requests or questions.

Finally, it may be advantageous, if special generators for supplementary sentence extensions are used in addition, which can have links to an arbitrary number of sentence generators.

### The invention has the following advantages:

- The assembly of the corpus is a controlled process. This corresponds more to an engineering way of work than simply to rely on the fact that a corpus will be well formed and consistent, if it is only large enough.
- The existence of necessary (deterministic) word combinations (like numbers or dates, all combinations of which *must* be available) can easier be assured. The existence of these combinations is not necessarily a fact even in a big corpus (e.g. from newspapers or from phone calls).
- The corpus can be designed for a special task without much overhead.
- An evolution is possible. New or missing features can be added easily, even from real scenarios or from prefiltered extracts of scenarios.
- The basis of sentence generation is not the "individual speaker", but the "knowledge on individual speech". This is a more general approach that will first lead to a basic system, which can then be refined in secondary processes. Sentence collection from hundreds of speakers can be avoided at least for the beginning.
- The sentence generation process "broadens" the available database. The danger of forgotten combinations can be minimized, and introduction of general branching probabilities into the generator networks can be used to optimize the recognizer behaviour.

### Drawing

An exemplary embodiment of the invention is described with reference to the figure, which shows a generator for command sentences.

### Exemplary embodiments

An exemplary embodiment of the invention is represented in the construction of the statistical grammar and vocabulary of a speaker independent continuous speech recognizer used in a speech control and dialog system for a TV-set, including EPG.

Eighteen sentence generators are built, wherein twelve of them are basic generators, and six of them are used to produce sentence extensions. The generators work independently, but they partially share the same sub lattices and they use a common vocabulary. A list of the generators can be seen below.
- command command sentences
- comment sentences beginning with "I prefer", "I don't mind", "it is", etc.
- request sentences beginning with "I want", "I would like to", etc.
- response answers to the system "Yes", "No", "thank you", "None of them", etc.
- quest_what Question beginning with "what"
- quest_cwould Question beginning with "can, could, would, etc."
- quest_when Question beginning with "when"
- quest_which Question beginning with "which"
- quest_who Question beginning with "who"
- quest_how Question beginning with "how"
- quest_do Question beginning with "do"
- quest_is Question beginning with "is"
- if_esc if-sentence extension
- esc_add_expr_esc additional expressions extension like "Tell me...", "Let us...", etc.
- esc_glob_ell_esc ellipsis on sentences extension (only in the beginning of a sentence)
- esc_item_ell_esc ellipsis on items extension like "the news and the weather report", etc.
- esc_prog_ell_esc ellipsis on programs extension like "BBCONE or BBCTWO"
- esc_time_ell_esc ellipsis on time ext. like "before six o'clock or after eight o'clock", etc.

The sub-lattices in the list below are used in most of the generators.
- intro introduction "Yes", "No", hesitation words and pauses
- hesitate hesitation words for intro like "well", "so", "right", "ehmm", "hum", etc.
- adv_time adv. expr. of time
- time times for the use in adv time and elsewhere
- hour numbers for the use in time end elsewhere (with "one")
- hours numbers for the use in time end elsewhere (without "one")
- minutes numbers for the use in time
- ord ordinary numbers ("first"..." tenth")
- item_def_sing items like "adventure movie", "talkshow", etc.
- item_def_plur items like "adventure movies", "talkshows", etc.
- item_def_sing1 items like "adventure movie", "talkshow", etc.
- item_def_plur1 items like "adventure movies", "talkshows", etc.
- item_indef items like "an adventure movie", ' "a different talkshow", etc.
- program programs like "BBC", "CNNINTERNATIONAL", etc.

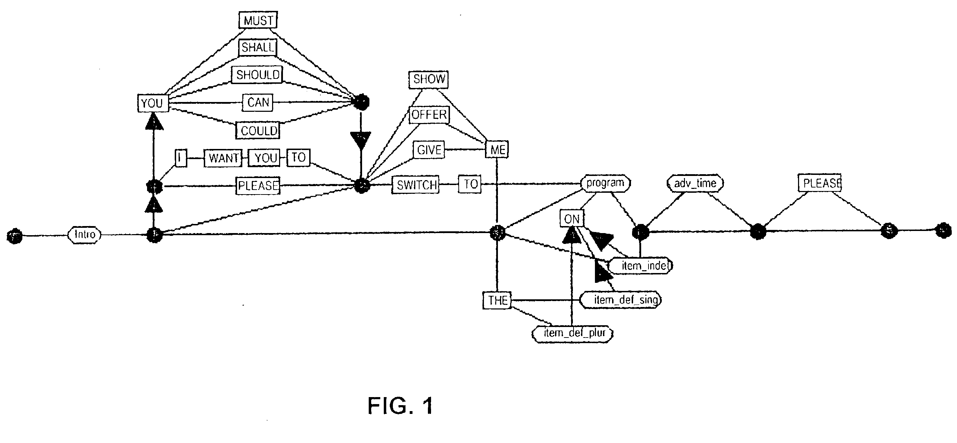

Figure 1 illustrates exemplary the sentence generator for command sentences.

The sentence generator starts with a sub-lattice "intro" which comprises introductory words like "yes", "no", hesitation words or pauses. After the introductory part the real command input starts. Various grammatical structures are possible. The user can give the command in a complete sentence, starting with "you must, shall, ..." , "I want you to ..." , "Please ...", followed by a verb like "show" or "offer me" etc. and finally followed by the program or program type and time of the broadcasting.

However, it is also possible to skip a part of the command sentence and to start with the respective verb or even with the program or program type etc. For the program or program type also sub-lattices are used which comprise the different programs or program types respectively. The program type can be given in singular, plural or indefinite form, which is taken into account by various sub-lattices. For the time input a further sub-lattice is used which allows general time expressions like "tomorrow", "this afternoon", "before midnight" but also exact time expressions like "8 pm". Finally, the command can be ended with "Please".

Supplementary sentence extensions (to introduce e.g. additional or special expressions can be linked into the already existing corpus. This offers a higher degree of freedom, especially with the generation of more complex sentences, limits the growth of the corpus, and does not violate the modularity.

It is also possible to build a corpus from sub-sentence units (partial sentences or phrases), and to link these units only in the bigram. This offers a way to design a grammar from a very small corpus, if the sub-units and links are chosen appropriately.

The vocabulary of each sentence generator can be taken from system dictionaries, as far as available. Particular words, e.g. programs, are assembled from phonemes. All used words of all sentence generators are saved in one user dictionary. If one word has more than one pronunciation, it occurs more than one time in the dictionary, but only once the word list.

The complete corpus is constructed from the outputs of all sentence generators. The number of generated sentences of each generator can be adjusted individually. This balancing is mainly based on the syntactic analysis, with some extensions.

At this point the recognizer is described by the dictionary and all the sentences (corpus). The dictionary is complete and can be loaded into the recognizer later. The corpus is the basis of the backed-off bigram which is built automatically after some intermediate steps of minor importance, which are not described here.

In the bigram calculation only words from the word list are taken into consideration. All other words are ignored. The word list contains all words of the vocabulary (each word once) and the nodes !ENTER and !EXIT. The bigram forces all sentences to start with an ENTER node and to stop with an !EXIT node, except there is an unknown word at the beginning and/or end of the sentence. The supplementary sentence extensions begin and/or end (per definition) with the word !ESCAPE, which is unknown to the bigram. Therefore, in the recognizing process these extensions cannot be entered and/or exited directly. This means, the extension can only be entered through the first word after !ESCAPE and/or be exited through the last word before !ESCAPE from the corresponding (same) word in any other matching sentence of the corpus. Great care must be taken in the design of extension generators, because there might be unnoticed or unwanted links, or balancing problems might occur.

The bigram file has to be converted into a lattice file and can then be loaded directly into the recognizer. From the speech-related point of view, the construction of the recognizer is completed here. The dictionary and the lattice are the main user defined files, which define the size and the properties of the recognizer.

The complete system may enclose additional components like Syntactic Parser, Contextual Interpreter, Dialog Manager, Interaction Generator, Text-to-Speech-Unit, Dialog Manager, which are not described here.

The invention can advantageously be used for speech recognition of continuously spoken words in medium scaled applications, e.g. speech-controlled EPG, with a vocabulary of some hundreds of words, or specialized sub-vocabularies in large scale applications, but also applies to any other kind of speech control and dialog systems.

## Claims

1. Method for the construction of a continuous speech recognizer, wherein a statistical grammar model is calculated based on a corpus of sentences, **characterized in that** sentence generators are used, which build groups of sentences each covering a certain area of the corpus to be constructed, wherein the corpus is assembled from the outputs of the sentence generators.

2. Method according to claim 1, **wherein** the sentence generators are derived from small scenarios or found intuitively.

3. Method according to claim 1 or 2, **wherein** the corpus is assembled from the weighted outputs of the sentence generators.

4. Method according to any of claims 1 to 3, **wherein** the certain areas covered by the sentence generators are special commands, requests or questions.

5. Method according to any of claims 1 to 4, **wherein** special generators for supplementary sentence extensions are used in addition, which can have links to an arbitrary number of sentence generators.
